# EUROPEAN PATENT APPLICATION

(11) **EP 4 838 732 A1**
(43) Date of publication of application: **11.11.2026**
(21) Application number: 26176804.8
(22) Date of filing: 06.05.2026
(51) Int. Cl.: H02G 15/184, H02G 15/113, H02G 15/007

(54) **ENCLOSURE FOR WIRE CONNECTOR**

(30) Priority: 08.05.2025 US 202563802120 P
(71) Applicant: DS2.0, LLC, Portland, TN 37148 (US)
(72) Inventor: SUEZ, Itai, Portland / TN, 37148 (US); MICHAEL, Dorothy Lou, Portland / TN, 37148 (US); SOLON, Dean, Portland / TN, 37148 (US)
(74) Representative: Fish & Richardson P.C.

(57) **Abstract**

This disclosure describes solutions for implementing an enclosure for a wire connector. This can include a reinforcing cage comprising: a bottom section configured to receive an electrical connector and at least two wires that are connected with the electrical connector while the reinforcing cage is in an open position; and a top section configured to mate with the bottom section, wherein while the reinforcing cage is in a closed position in which the top section mates with the bottom section, the sections engage the at least two wires thereby damping axial forces and torque transferred from the wires to the connector.

## Description

### CLAIM OF PRIORITY

This application claims priority to U.S. Provisional Application No. 63/802,120, filed on May 8, 2025. The disclosure of the prior application is considered part of and is incorporated by reference in the disclosure of this application.

### BACKGROUND

Electrical connectors link devices, circuits, and systems to transmit power and signals. Connectors can vary from simple terminal blocks to complex multi-pin designs, tailored to specific voltage, current, and environmental needs. Electrical connectors are used widely in automotive, aerospace, consumer electronics, telecom, power and transmission, as well as renewable power applications such as solar photovoltaic (PV) installations, which can be subject to external forces, causing wear, weakening connections, or breaking.

### SUMMARY

The present disclosure involves methods, systems, and an apparatus for implementing an enclosure for a wire connector. This can include a reinforcing cage comprising: a bottom section configured to receive an electrical connector and at least two wires that are connected with the electrical connector while the reinforcing cage is in an open position; and a top section configured to mate with the bottom section, wherein while the reinforcing cage is in a closed position in which the top section mates with the bottom section, the sections engage the at least two wires thereby damping axial forces and torque transferred from the wires to the connector.

Implementations can optionally include one or more of the following features.

In some instances, the cage comprises one or more vents configured to ventilate an interior of the cage.

In some instances, at least one of the top section or the bottom section comprises one or more protrusions configured to receive the electrical connector at predetermined location within the cage, wherein the one or more protrusions are located in an interior of a main body of the cage.

In some instances, the protrusion is the only direct physical contact between the cage and the electrical connector; and the protrusion is located between edges of the cage.

In some instances, the cage includes clamp points, wherein the clamp points are portions of the cage that engage the wires when the cage is in the closed position.

In some instances, the clamp points on the bottom section or the top section have a smaller inner radius than an inner radius of a main body of the cage, wherein the main body of the cage is located between two clamp points.

In some instances, the top section and the bottom section comprise clamp points configured to enclose the at least two wires, and wherein the clamp points comprise adhesive material.

In some instances, the top section and the bottom section are connected by a hinge.

In some instances, the top section and the bottom section are configured to interlock with snap connectors.

In some instances, the top section and the bottom section are formed of a synthetic polymer.

In some instances, the synthetic polymer is at least one of polypropylene, polyethylene, or nylon.

This disclosure further involves a system for reinforcing an electrical connector comprising: at least two wires connected with the electrical connector; a bottom section configured to receive the electrical connector; and a top section configured to mate with the bottom section, wherein when the top section mates with the bottom section the sections engage with the at least two wires thereby damping axial forces and torque transferred from the wires to the connector.

In some instances, the system includes one or more holes configured to ventilate an interior of the mated sections.

In some instances, the bottom section comprises one or more protrusions configured to receive the electrical connector at predetermined location within the mated sections.

In some instances, the protrusion is the only direct physical contact between the mated sections and the electrical connector.

In some instances, the top section and the bottom section comprise clamp points configured to enclose the at least two wires, and wherein the clamp points comprise adhesive material.

In some instances, the top section and the bottom section are connected by a hinge.

In some instances, the top section and the bottom section are configured to interlock with snap connectors.

In some instances, the top section and the bottom section are formed of a synthetic polymer.

In some instances, the synthetic polymer is at least one of polypropylene, polyethylene or nylon.

The subject matter discussed herein can provide one or more of the following advantages. The disclosed enclosure, also referred to as a reinforcement cage or cage, can be inexpensively constructed and rapidly installed on mated wires using electrical connectors. The cage can be readily applied to existing electrical connections without interrupting or breaking the connection and/or new connector installations. For example, a mated connector pair that electrically connects/mates two wires can be inserted into the cage while the cage is in the open position, and the cage can be transitioned to the closed position in which the cage surrounds the connector, thereby protecting the connector from external forces. Additionally, when the cage is transitioned to the closed position, portions of the cage on one or both ends of the connector can physically engage with the wires mated by the connector to prevent push, pull, bend, or rotational forces from being applied to the connector pair being protected. More specifically, when push, pull, bend, or rotational forces are exerted on the wires outside of the cage, the physical engagement of the cage on the wires transfers the forces from the wire to the cage, which prevents the forces from being transferred to the connector that is inside the cage. In this way, the cage reduces/prevents premature wear and damage to the connector that may otherwise be caused by the forces applied to the mated electrical connection element (for example, a metal pin/socket assembly) absent the physical engagement of the cage with the wired. Additionally, the physical form of the cage enables the cage to be installed by hand, such that no specialized tools or equipment are necessary to use the disclosed solution to reinforce electrical connections.

The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 illustrates a wire connection system with a reinforcing cage.
FIG. 2 illustrates an example reinforcing cage in an open configuration.
FIG. 3 is a perspective view of a section of a reinforcing cage.
FIG. 4 illustrates an example of a reinforcing cage with a connector installed.
FIG. 5 is a perspective view of a reinforcing cage in a closed configuration.
FIG. 6 illustrates a wire connection system with an alternative reinforcing cage.

### DETAILED DESCRIPTION

This disclosure describes implementations for an enclosure, also referred to as a reinforcement cage or simply a cage, that can transfer axial forces (e.g., linear forces) and torque (e.g., rotational force) between two connected wires without applying these forces through a mated electrical connection. For example, as discussed in detail throughout this document, the cage discussed herein is configured to house a connector within an outer perimeter of the cage, and physically engage the two wires that are connected to a connector assembly. In this way, the outer perimeter of one end of the cage transmits any externally applied force to the other end of the cage thereby protecting the connector from direct physical forces that could physically damage the mated electrical connection element (which can be a metal pin/socket assembly), as well as any axial or rotational forces applied to the wires, which could also physically damage the connector.

Electrical connectors often include a male interface and a female interface (e.g., a pin and socket) that cooperatively mate with a snap or friction fit connection in order to allow current or electrical signals to flow between two or more coupled wires. Since many wires are inherently flexible, connectors are often used in scenarios where the wire will bend, twist, or otherwise move. For example, wiring is used in vehicles, heavy equipment, PV panel (e.g., solar panel) installations, and other places where the flexibility of the wire is relied upon to maintain electrical connection during movement of components. Electrical connectors are typically more rigid and/or less flexible than the wires they connect, and as a result, forces applied to the wires can concentrate at the connectors, thereby causing the connectors to absorb the forces, and causing damage to the connectors, which can result in high impedance or intermittent electrical connections between the wires leading to excessive ohmic heating, arcs, or other faults. Some of the faults can result in fires or other surrounding damage beyond the damage to the connector or the connector housing itself. In order to reduce/prevent wear on electrical connectors caused by external forces applied to the wires, and decrease failures due to poor connection at connectors, a reinforcement device (reinforcement cage) that redirects forces around the connector from wire to wire or isolates the connector from external forces is disclosed.

In general, a reinforcement cage can physically engage the wire connected to either end (or both ends) of the connector, while reducing, limiting, or minimizing contact with the connector. The configuration and/or selective engagement of the reinforcement cage discussed herein facilitates the transfer of axial and/or torsional forces applied to one or more of the wires from one wire, through the reinforcement cage, and to the other wire, thereby reducing or preventing these forces from being applied to the connector.

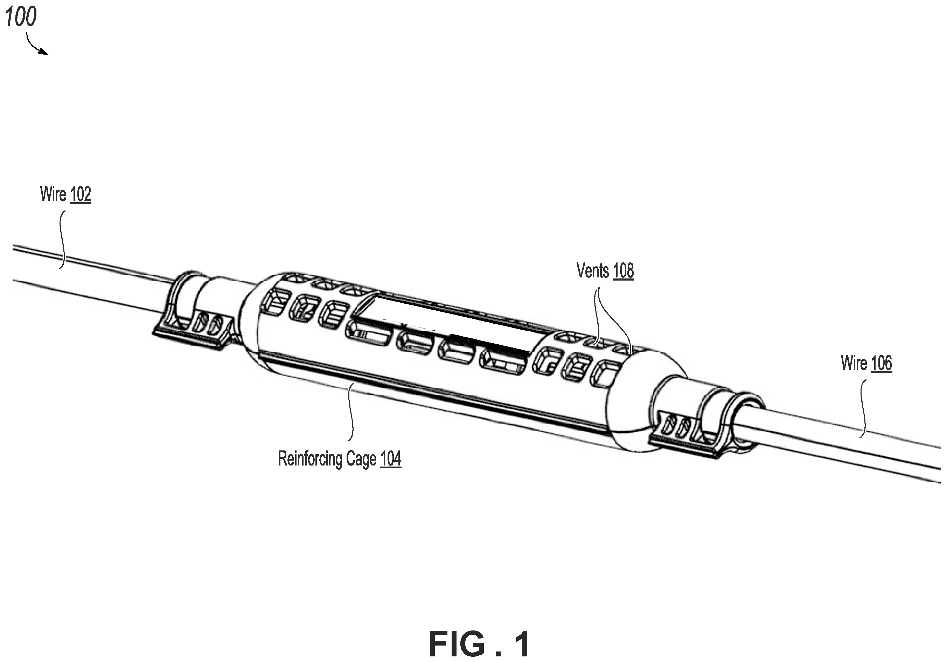

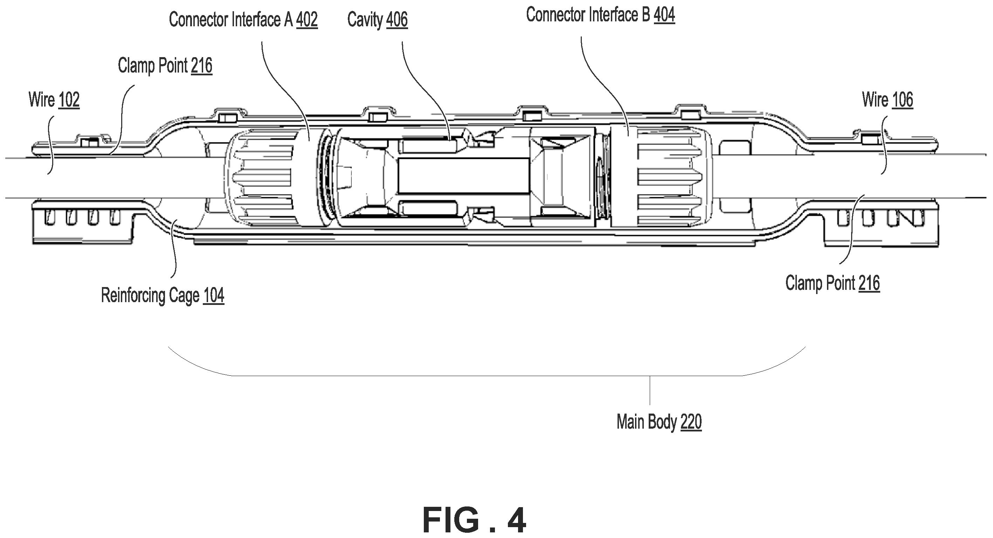

FIG. 1 illustrates a wire connection system 100 with a reinforcing cage. The wire connection system 100 includes a wire 102, the reinforcing cage 104, and a wire 106. In general, the reinforcing cage 104 clamps onto, or otherwise engages, the wires 102 and 106, and encloses or surrounds the electrical connector (not shown) within an interior portion of the reinforcing cage 104 (illustrated below in FIG. 4). The reinforcing cage 104 can be transitioned from an open state or position to a closed state or position, for example, by being snapped together over the electrical connector without disconnecting or breaking the electrical connection. In some implementations, the electrical connection can be formed within the cage 104 by placing both ends of the connector at designated locations within the cage 104, and transitioning the cage 104 from an open position to a closed portion, for example, by snapping the cage 104 shut, which forces the connector together. While snapping the cage shut is discussed with reference to closing the cage 104, the cage 104 can be configured to close using clasps, bolts, or other mechanisms for securing two sections of the cage 104 together, thereby housing the connector in the interior of the cage 104 and physically engaging the wires 102 and 106 being electrically connected by the connector. In some implementations, zip ties can be used to secure the two sections of the cage 104 together.

As shown, the cage 104 includes vents 108. The vents are voids formed in the cage, thereby allowing air to flow through the cage 104. In this way, heat emitting from connector and/or portions of the wires 102 and 106 that are housed in the cage 104 can dissipate.

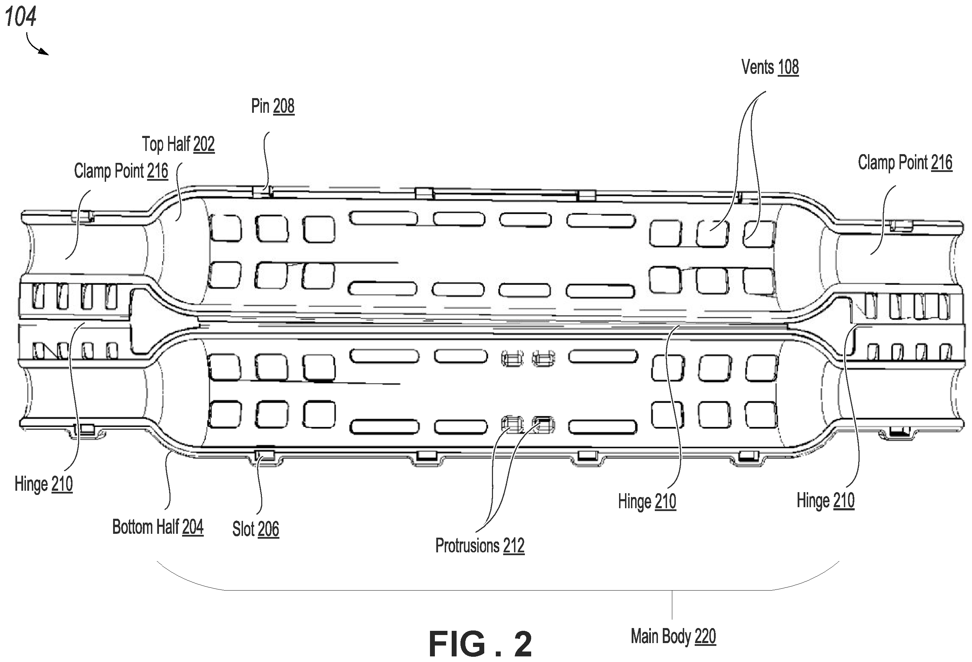

FIG. 2 illustrates an example reinforcing cage 104 in an open position/state. As illustrated, the reinforcing cage 104 includes a top section 202 (e.g., a top half) and a bottom section 204 (e.g., bottom half), which can be pivotally joined by hinges 210 along an edge of the cage 104. This hinged design allows the two sections to open and close, facilitating clamping during installation.

In some implementations, the hinges 210 are living hinges. A living hinge is a thin, flexible section of material that connects two more rigid parts, allowing the more rigid parts to bend or pivot relative to each other. A living hinge can be made from the same material as the more rigid parts the living hinge connects. In some implementations, the living hinge is made from plastic, and is designed to withstand repeated bending without breaking. Implementing the hinges 210 as living hinges enables hinge functionality without the need for separate mechanical components like metal pins or joints. In some implementations, traditional hinges (e.g., separate mechanical components) can be used instead of, or in combination with, living hinges. For example, traditional hinges could be used to implement the outer hinges proximate to the ends of the cage 104, while a living hinge could be used to implement one or more inner hinge(s) located between the outer hinges.

Body pins 208 are incorporated in/on the bottom section 204 which align with corresponding body slots 206 in/on the top section 202 to lock the assembly. Each body pin 208 and body slot 206 pair constitutes a snap connector. These snap connectors can ensure precise mating and a firm connection when closed, thereby enhancing stability and preventing inadvertent disengagement. While illustrated with hinges 210 body pins 208 and body slots 206, other mating mechanisms are possible. Additionally, bottom section 204 and top section 202 need not be different. For example, two identical sections/halves could each include body slots 206 and body pin 204, and not be pivotally joined but configured to mate with each other.

More specifically, each of the top section 202 and bottom section 204 can each have an alternating pattern of body slots 206 and body pins 204. For example, one edge of the top section 202 can have a slot-hole-slot configuration and the other edge of the top section 202 can have a hole-slot hole configuration. In this example, one edge of the bottom section 204 can also have the slot-hole-slot configuration and the other edge of the bottom section 204 can have the hole-slot hole configuration. In this example, the top section 202 and bottom section 204 can be mated by aligning the edge of the top section 202 having the hole-slot hole configuration with the edge of the bottom section 204 having the slot-hole-slot configuration. In this way, the top section 202 and the bottom section 204 would be identical and still effectively mate.

Vents 108 are integrated into (e.g., formed in) the top section 202 and bottom section 204 to provide ventilation, prevent overheating during operation, and ensure pressure is equalized across the reinforcing cage 104. The vents 108 can be formed, for example, by creating or forming voids in the body of the cage 104.

The cage 104 includes clamp points 216, which can also be referred to as clamp sections because the area occupied by the clamp points 216 can vary based on design choices and/or the amount of friction required between the cage 104 and wires when the cage 104 is in the closed position. The clamp points 216 are positioned to engage the wires when the cage 104 is in a closed position/configuration, maintaining consistent pressure and contact between the reinforcement cage 104 and the wires. In some implementations, the clamp points 216 are formed on opposite ends of a main body 220 of the cage 104. More specifically, the main body 220 can be a center section (e.g., center 2/3 or some other center portion) of the cage 104, while the clamp points 216 can be formed in outer sections (e.g., and outer 1/3) of the cage 104 relative to the main body 220. The clamp points 216 can each include one or more body slots 206 and/or body pins 208 to ensure that pressure is continuously exerted on wires located at the clamp points 216 when the cage 104 is in the closed position.

The clamp points 216 can be formed to have a curved/annular shape that accepts ovular/circular wires. In some implementations, the clamp points 216 can be formed to have a rectangular shape, for example, if rectangular wires are used. The clamp points 216 can have a smaller inner diameter and/or inner volume than the inner diameter and/or inner volume of the main body 220 of the cage 104. For example, the connector used to connect the wires will generally have a larger diameter than the wires. As such, the inner diameter of the main body 220, which is configured to house the connector, can be larger to accommodate the connector. Meanwhile, the clamp points 216 will have a smaller inner diameter than the main body 220 so that the clamp points 216 will physically engage the wires when the cage 104 is in the closed position, thereby exerting force/pressure on the wires or bonding material (e.g., tape, adhesive, gel, etc.) affixed to the wires to redirect forces applied to the wires to the cage 104. In this manner, torque and axial forces can be transmitted from one wire (e.g., wire 102) through the cage 104, directly to a second wire (e.g., wire 106) without being transmitted through or passing into the connection. In other words, the clamped cage 104 can serve to dampen axial and torque forces felt by the connector within.

In some implementations, the reinforcing cage 104 includes multiple protrusions 212 in the bottom section 204 (or in the top section 202). These protrusions 212 can be positioned to index with or slot into a portion of the connector for simple and accurate installation. For example, the protrusions can be tabs, stubs, or other protrusions that are located distal enough from the clamp points 216 such that, when the connector is positioned in the main body 220 by aligning holes or guides of the connector with the protrusions 212, the connector will not be physically engaged by the clamp points 216. Similarly, the protrusions 212 can be centrally located between edges of the main body 220 to prevent the connector from being pinched by the edges of the main body 220. As used herein, the edges of the main body 220 extend between two clamp points 216 of the same section (e.g., bottom section 204 or top section 202). While protrusions 212 are illustrated only on bottom section 204, in some implementations, they can be in different locations, on both sections, or not present at all.

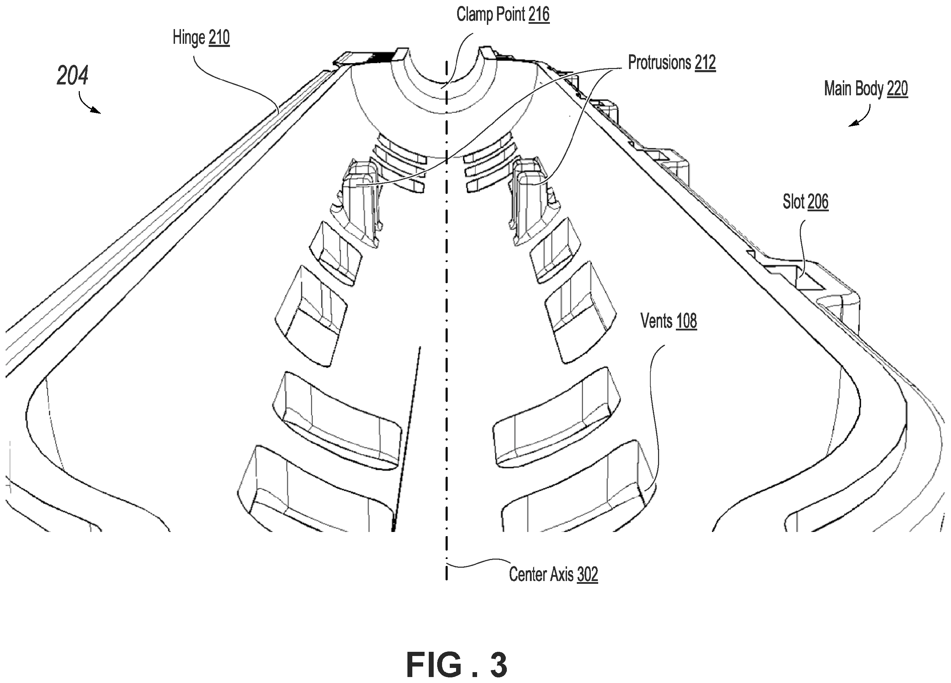

FIG. 3 is a perspective view of one section of a reinforcing cage. Specifically, the bottom section 204 from FIG. 2 is illustrated. In the illustrated view protrusions 212 can be seen positioned where a connector might rest when placed within the cage. As shown, two sets of protrusions 212 are formed on opposite sides of a center axis 302 of the bottom section 204. As noted above, some implementations can include a single set of protrusions 212 on one side of the center axis 302, a single protrusion 212 on each side of the center axis 302, or some other configuration of protrusions 212. In some implementations, protrusions 212 are the only point of contact between the connector interface and the main body 220 and are designed such that movement between the main body 220 and the connector interface is possible. In other words, while the protrusions 212 can serve to index the connector interface within the main body 220, it can be designed to minimize or eliminate force transferred between the main body 220 and the connector interface.

The illustration of FIG. 3 also shows how the inner radius of the clamp point 216 is smaller than the inner radius of the main body 220, and that the vents 108 are voids through the main body 220. FIG. 3 also shows that the hinge 210 is located at an opposite edge of the main body 220 than the body slots 206. In this example, the hinge 210 will also be located at the opposite edge of the main body than the body pins 208.

FIG. 4 illustrates an example of a reinforcing cage 104 with a connector installed within the main body 220. The top section of the cage 104 has been removed so that connector interface A 402 and connector interface B 404 are visible. Clamp points 216 will friction fit onto wires 102 and 106. In some implementations, additional material can be used to ensure a positive transfer of forces between wires 102 and 106 and the cage 104. For example, the wires 102 and 106, or the clamp points 216 can have and adhesive tape, or double-sided tape applied to them before they are clamped. In another example, another adhesive material such as a silicone or epoxy can be used. In some implementations, a pressure sensitive adhesive, with or without a gel-based or foam tape can be used to ensure positive engagement. This adhesive material can be positioned, for example, within clamp point 216 to ensure positive engagement of the clamp point 216 to the wire. Additionally, this extra material can ensure that the reinforcing cage 104 does not significantly deform wire insulation when installed. In some implementations, the cage 104 includes a recess or location designed to receive a securing tension band such as a zip-tie or a screw type clamp (e.g., a hose clamp). Any design that affixes the cage 104 to the wires without permitting slip between the cage 104 and the wire is considered within the scope of this disclosure.

Connector interface A 402 includes one or more cavities 406 into which one or more protrusions similar to those illustrated above with respect to FIGS. 2 and 3 can slot (e.g., be inserted). While the cavity 406 is illustrated as a rectangle, other shapes or sizes are possible. For example, cavity 406 could be a round, notch shape on a single side, or both sides of connector interface A 402. In some implementations, connector interface B 404 further includes indexing features such as cavities or slots and the reinforcing cage 104 can include protrusions on the connector interface B 404 side as well.

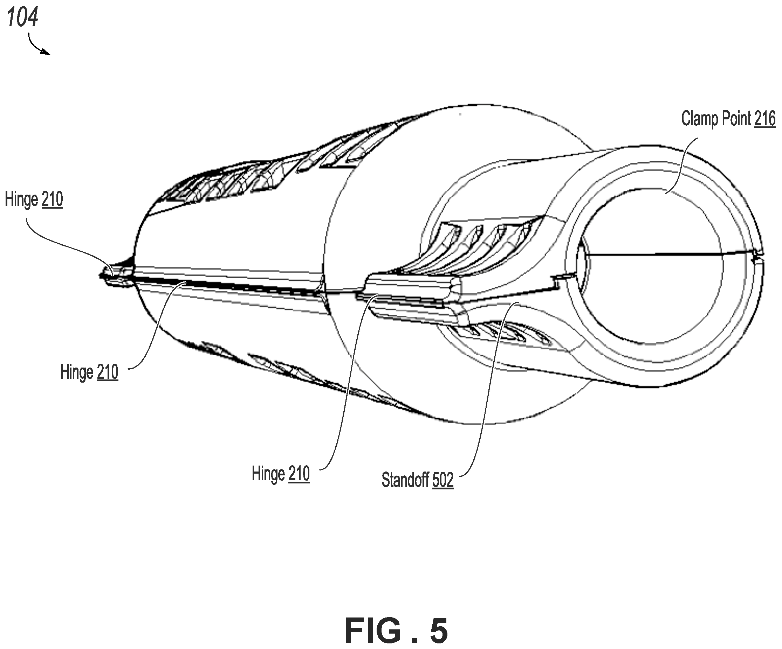

FIG. 5 is a perspective view of a reinforcing cage 104 in a closed position/configuration. The reinforcing cage 104 is depicted as a cylindrical structure with a hollow interior, configured to encase and support electrical connectors. Hinges 210 are shown as "living hinges" in nylon or other polymer material (e.g., polypropylene, polyethylene) and facilitate flexibility to allow the cage to close over the connector. While illustrated as cylindrical, the reinforcing cage 104 can be other shapes. For example, the reinforcing cage 104 can have a conical shape, rectangular shape, square or spherical shape, or other suitable geometry. It should be noted that the hinge 210 near the clamp points 216, where the radius of the diameter 104 is reduced is positioned on a standoff 502. This feature aligns the hinges at the end with the center hinge to form such that the hinges 210 cooperate to form a single pivot axis for each section of the cage 104.

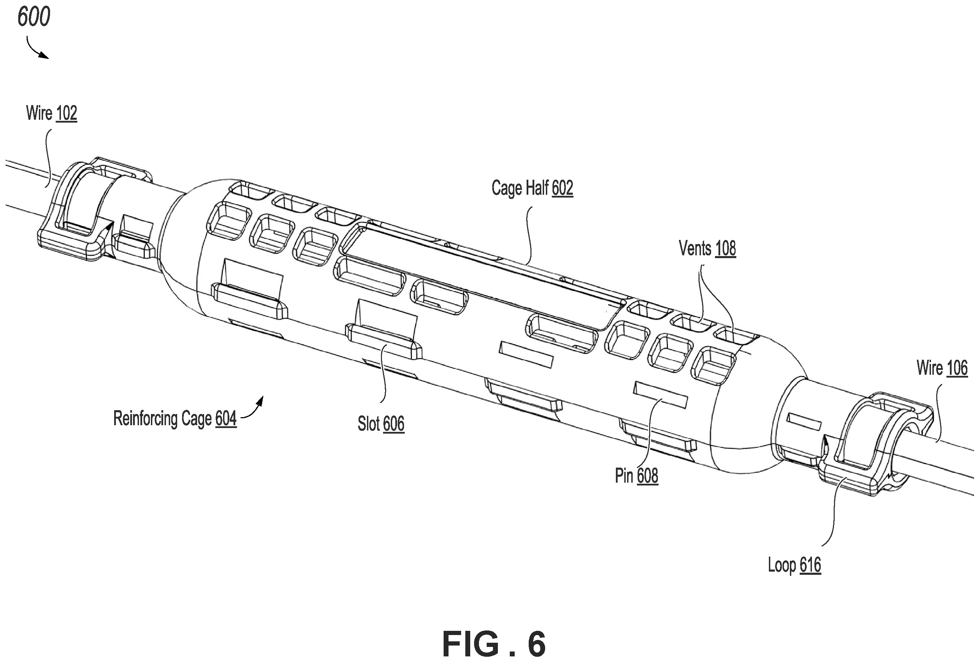

FIG. 6 illustrates a wire connection system 600 with an alternative reinforcing cage 604. As shown in the illustration, the reinforcing cage 604 is formed of two cage halves 602 which snap together. Each half includes slots 606 and pins 608. The example cage halves 602 are identical and connect without the need of a hinge as illustrated above.

In the illustrated example, loops 616 are located near the ends of the halves 602, which can guide or locate a reinforcement such as a zip tie, cable tie, or strap. For example, a user can clip two cage half 602 over a connector, then thread a tie through the loops 616 on each side of the reinforcing cage 604. Then the ties can be tensioned to secure the reinforcing cage 604 to the wires 102 and 106.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

The foregoing description is provided in the context of one or more particular implementations. Various modifications, alterations, and permutations of the disclosed implementations can be made without departing from scope of the disclosure. Thus, the present disclosure is not intended to be limited only to the described or illustrated implementations but is to be accorded the widest scope consistent with the principles and features disclosed herein.

## Claims

1. A reinforcing cage comprising:
a bottom section configured to receive an electrical connector and at least two wires that are connected with the electrical connector while the reinforcing cage is in an open position; and
a top section configured to mate with the bottom section, wherein while the reinforcing cage is in a closed position in which the top section mates with the bottom section, the sections engage the at least two wires thereby damping axial forces and torque transferred from the wires to the connector.

2. The reinforcing cage of any preceding claim, comprising one or more vents configured to ventilate an interior of the cage.

3. The reinforcing cage of any preceding claim, wherein at least one of the top section or the bottom section comprises one or more protrusions configured to receive the electrical connector at predetermined location within the cage, wherein the one or more protrusions are located in an interior of a main body of the cage.

4. The reinforcing cage of claim 3, wherein
the protrusion is the only direct physical contact between the cage and the electrical connector; and
the protrusion is located between edges of the cage.

5. The reinforcing cage of any preceding claim, further comprising clamp points, wherein the clamp points are portions of the cage that engage the wires when the cage is in the closed position, and
optionally wherein the clamp points on the bottom section or the top section have a smaller inner radius than an inner radius of a main body of the cage, wherein the main body of the cage is located between two clamp points.

6. The reinforcing cage of any preceding claim, wherein the top section and the bottom section comprise clamp points configured to enclose the at least two wires, and wherein the clamp points comprise adhesive material.

7. The reinforcing cage of any preceding claim, wherein the top section and the bottom section are connected by a hinge.

8. A system for reinforcing an electrical connector comprising:
at least two wires connected with the electrical connector;
a bottom section configured to receive the electrical connector; and
a top section configured to mate with the bottom section, wherein when the top section mates with the bottom section the sections engage with the at least two wires thereby damping axial forces and torque transferred from the wires to the connector.

9. The system of claim 8, comprising one or more holes configured to ventilate an interior of the mated sections.

10. The system of claim 8 or 9, wherein the bottom section comprises one or more protrusions configured to receive the electrical connector at predetermined location within the mated sections.

11. The system of claim 10, wherein the protrusion is the only direct physical contact between the mated sections and the electrical connector.

12. The system of any one of claims 8 to 11, wherein the top section and the bottom section comprise clamp points configured to enclose the at least two wires, and wherein the clamp points comprise adhesive material.

13. The system of any one of claims 8 to 12, wherein the top section and the bottom section are connected by a hinge.

14. The reinforcing cage of any one of claims 1 to 7 or the system of any one of claims 8 to 13, wherein the top section and the bottom section are configured to interlock with snap connectors.

15. The reinforcing cage of any one of claims 1 to 7 or 14 or the system of any one of claims 8-14, wherein the top section and the bottom section are formed of a synthetic polymer, and
optionally wherein the synthetic polymer is at least one of polypropylene, polyethylene or nylon.
